# EUROPEAN PATENT APPLICATION

(11) **EP 1 499 143 A2**
(43) Date of publication of application: **19.01.2005**
(21) Application number: 04005488.4
(22) Date of filing: 08.03.2004
(51) Int. Cl.: H04Q 7/32

(54) **Wireless communication terminal apparatus**

(30) Priority: 16.07.2003 JP 2003197854
(71) Applicant: Kabushiki Kaisha Toshiba, Minato-ku, Tokyo 105 (JP)
(72) Inventor: Iimori, Eiji, Toshiba Corporation, Minato-ku Tokyo 105-8001 (JP)
(74) Representative: HOFFMANN - EITLE

(57) **Abstract**

The present invention is a communication terminal apparatus capable of making communication via a base station connectable with a communication network.
The apparatus includes first control means (10a) for receiving a signal transmitted from a serving base station, first level detection means (5) for detecting a level of the signal transmitted from the serving base station, second control means (10a) for stopping the operation of the receiving means (3) if the level detected by the first level detection means (5) is equal to or higher than a threshold value, third control means (10a) for receiving a signal transmitted from a base station other than the serving base station if the level detected by the first level detection means (5) is lower than the threshold value, second level detection means (5) for detecting a level of the signal received under control of the third control means (10a), and threshold value varying means (10a) for varying the threshold value in accordance with which of the level detected by the first level detection means (5) and the level detected by the second level detection means (5) is higher.

## Description

This invention relates to a communication terminal apparatus in a radio communication system such as a mobile telephone system.

In a wideband code division multiple access (W-CDMA) system based on 3GPP, which is one of mobile telephone systems, generation of an incoming call is monitored in the intermittent reception scheme.

At the monitoring time, the intermittent reception scheme operates the communication function during a period when a paging signal notify presence or absence of an incoming call is transmitted intermittently from a base station (ready state), and operates an operating section, a display section and their related portions during other periods (sleep state).

If an incoming call is detected from the paging signal in the ready state, the intermittent reception is stopped, the communication function is continuously operated to make communication. If the incoming call is not detected, a timer is reset, a power supply of each section is turned off, and the sleep state is maintained again until the following paging signal is transmitted.

Thus, the consumed power can be reduced at the incoming call standby time by employing the intermittent reception scheme.

Incidentally, when the ready state is set again from the sleep state, synchronization is to be made with a base station which has received signals in the previous ready state. However, if the receiving level from the base station is low, cell search is executed to search for the other base station suitable for the communication.

However, some of the base stations detected by the conventional manner of the cell search are not definitely suitable for the communication. Thus, the cell search needs to be executed again and the batter power may be therefore wasted.

The present invention has been accomplished to solve the above-described problem. The object of the present invention is to provide a communication terminal apparatus capable of reducing the power consumption by efficiently executing the cell search in the communication of the intermittent reception.

According to an aspect of the present invention, there is provided a communication terminal apparatus capable of making communication via a base station connectable with a communication network. The apparatus comprises receiving means for receiving a signal transmitted from the base station, first control means for controlling the receiving means to receive a signal transmitted from a serving base station transmitting a paging signal to the communication terminal apparatus if a preset time has passed, first level detection means for detecting a level of the signal received by the receiving means under control of the first control means, second control means for controlling the receiving means to stop the operation of the receiving means if the level detected by the first level detection means is equal to or higher than a threshold value, third control means for controlling the receiving means to receive a signal transmitted from a base station other than the serving base station if the level detected by the first level detection means is lower than the threshold value, second level detection means for detecting a level of the signal received by the receiving means under control of the third control means, and threshold value varying means for varying the threshold value in accordance with which of the level detected by the first level detection means and the level detected by the second level detection means is higher.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram showing a communication terminal apparatus according to an embodiment of the present invention;
FIG. 2 is a flowchart of intermittent reception control of the communication terminal apparatus shown in FIG. 1; and
FIG. 3 is a flowchart of the intermittent reception control of the communication terminal apparatus shown in FIG. 1.

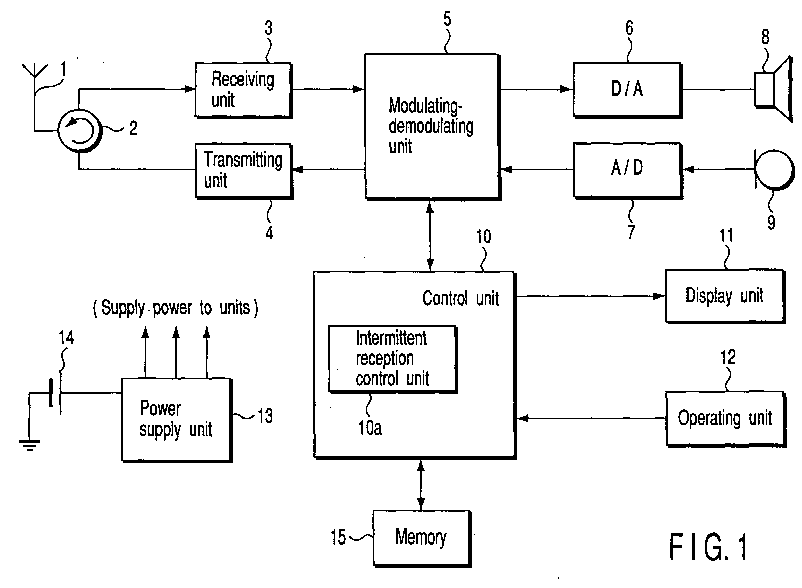

FIG. 1 is a block diagram showing a mobile communication terminal according to an embodiment of the present invention. A W-CDMA mobile communication terminal is explained below.

The terminal comprises an antenna 1, a circulator 2, a receiving unit 3, a transmitting unit 4, a modulating-demodulating unit 5, a D/A-converter and driver 6, a speech-electric converter and A/D converter 7, a speaker 8, a microphone 9, a control unit 10, a display unit 11, an operating unit 12, a power supply unit 13, a battery 14 and a memory 15.

The control unit 10 is composed of a microprocessor or the like. The control unit 10 wholly controls the units of the mobile communication terminal and executes detecting an incoming call according to a paging signal, processing hand-off, processing outgoing calls in response to an outgoing call request made by a user through the operating unit 12, speech communication processing and the like. An intermittent reception control unit 10a included in the control unit 10 executes intermittent reception by controlling operations of the units of the mobile communication terminal.

The memory 15 is a memory unit composed of semiconductors such as RAM, ROM and the like. The memory 15 stores control data and control programs of the control unit 10, reception control data used to receive signals from base stations in serving cells, known cells and unknown cells, parameters used by the control unit 10a, and telephone directory data which is formed by the user and which correspond to telephone numbers, names and the like. The reception control data includes data to identify cells, data to identify spreading codes used to receive signals from the base stations in the cells.

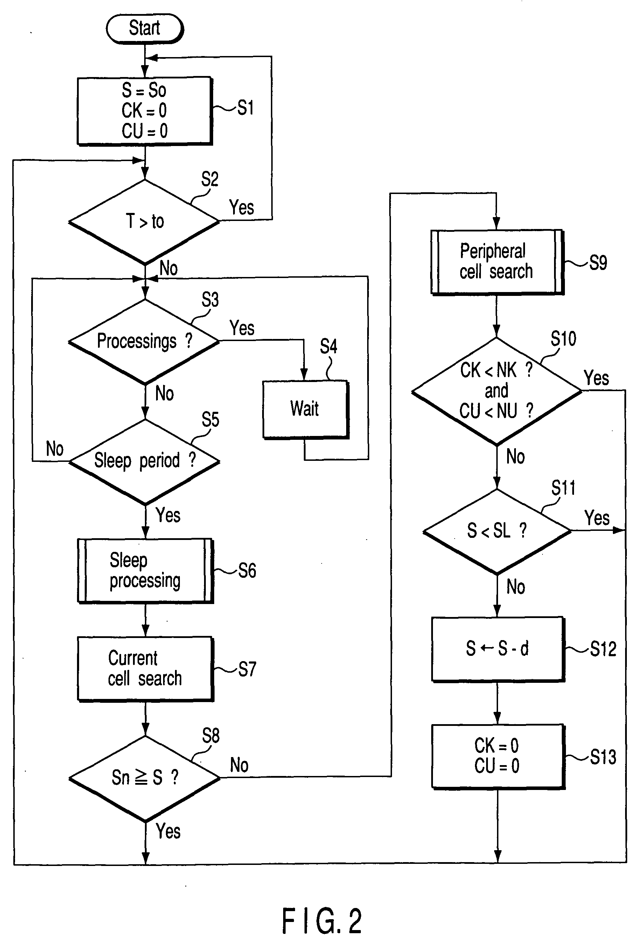

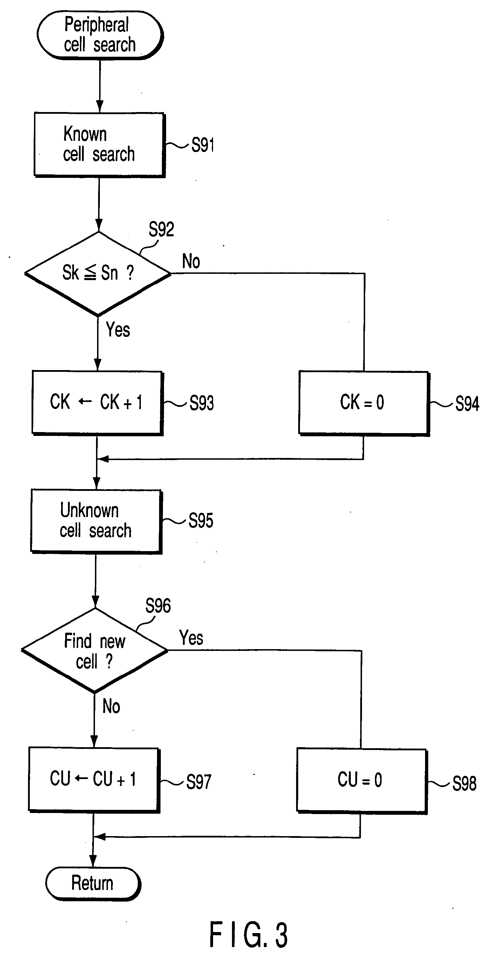

Next, the intermittent reception control of the mobile communication terminal having the above-described structure is explained. FIGS. 2 and 3 are flowcharts showing the operation of the intermittent reception control. The processings shown in the figures are executed by the control unit 10a when the power is turned on.

First, the control unit 10a sets an initial value So as a threshold value S and sets "0" at a reset timer T, a known cell counter CK and an unknown cell counter CU, in step S1. The control unit 10a starts the reset timer T and the operation proceeds to step S2.

The threshold value S is a threshold value corresponding to a power Sn of a signal received from a base station synchronized in the previous ready state, i.e. a base station of the serving cell. The initial value So is instructed to the mobile communication terminal by the system or is set in advance at the control unit 10a of the mobile communication terminal.

The known cell counter CK represents the number of times of the cell search at the known cell by which the receiving power higher than the power Sn of the signal received from the base station of the serving cell cannot be received. The known cell is a base station which has been a serving cell.

The unknown cell counter CU represents the number of times of the cell search by which the signal cannot be received from the unknown cell. The unknown cell is a base station which has not been a serving cell.

The control unit 10a determines whether the count value of the reset timer T is more than to in step S2. If the count value is more than to, the control returns to step S1. If the count value is less than to, the operation proceeds to step S3.

In step S3, the control unit 10a determines whether the control unit 10 starts the outgoing call processing, whether the control unit 10 detects the incoming call from the paging signal, or whether the control unit 10 executes the hand-off processing.

If the outgoing call processing is started, the incoming call is detected or the hand-off processing is executed, the operation proceeds to a step 54. If the outgoing call processing is not started, the incoming call is not detected or the hand-off processing is not executed, the operation proceeds to a step S5.

In step S4, the control unit 10a waits for end of the processings executed by the control unit 10. The processings include the outgoing call processing, response to the incoming call, communication executed after these processings, the hand-off processing and the like, which cannot be executed in the sleep state. If these processings end, the operation returns to step S3.

In step S5, the control unit 10a determines whether the period to switch the ready state to the sleep state has come. If the period has come, the operation proceeds to step S6. If the period has not yet come, the operation returns to step S3.

In step S6, the control unit 10a starts a sleep timer Ts built in the mobile communication terminal, stops the power supply to the receiving unit 3 and the transmitting unit 4 and switches the ready state to the sleep state. After that, if the sleep timer Ts counts that a predetermined time has passed, the operation proceeds to step S7. The predetermined time is a time when the base station of the serving cell finishes transmitting the paging signal for the mobile communication terminal.

In step S7, the control unit 10a starts the power supply to the receiving unit 3 and the receiving unit 4 and switches the sleep state to the ready state. The control unit 10a controls the receiving unit 4 on the basis of the reception control data stored in the memory 15 to synchronize with the base station of the serving cell and execute the serving cell search of receiving a signal from the base station. The control unit 10a also controls the modulating-demodulating unit 5 to demodulate the received signal and detect the power level Sn of the signal received from the base station. The operation proceeds to step S8.

In step S8, the control unit 10a determines whether the power level Sn detected in step S7 is equal to or greater than the threshold value S or not. If the power level Sn is equal to or greater than the threshold value S, the control unit 10a determines that peripheral cell search is unnecessary, and the operation returns to step S2. If the power level Sn is smaller than the threshold value S, the control unit 10a determines that peripheral cell search is required, and the operation proceeds to step S9.

In step S9, the control unit 10a executes the peripheral cell search as shown in FIG. 3. The peripheral cell search is explained below with reference to FIG. 3.

In step S91, the control unit 10a controls the receiving unit 4 on the basis of the reception control data stored in the memory 15 to synchronize with the base station of the known cell and execute the known cell search of receiving a signal from the base station. The control unit 10a also controls the modulating-demodulating unit 5 to demodulate the received signal and detect the power level Sk of the signal received from the base station. The operation proceeds to step S92.

In step S92, the control unit 10a determines whether the power level Sk detected in step S91 is equal to or smaller than the power level Sn of the base station of the serving cell detected in step S7 or not. If the power level Sk is greater than the power level Sn, the control unit 10a determines that the known cell search is valid (effective), and the operation proceeds to step S94. If the power level Sk is equal to or smaller than the power level Sn, the control unit 10a determines that the known cell search is invalid (ineffective), and the operation proceeds to step S93.

In step S93, the control unit 10a adds "1" to the known cell counter CK, and the operation proceeds to step S95.

In step S94, the control unit 10a resets the known cell counter CK to "0". The control unit 10a makes communication with the base station of the known cell searched in step S91 and regards this base station as the base station of the serving cell, and the operation proceeds to step S95.

In step S95, the control unit 10a controls the receiving unit 4 on the basis of the reception control data stored in the memory 15 to execute the known cell search of receiving the signal from the base station of the unknown cell. The operation proceeds to step S96. In the known cell search, the control unit 10a detects correlation in the timings of code lengths of spread codes to be searched.

In step S96, the control unit 10a determines whether the signal could be received from the base station of the unknown cell in step S95, i.e. whether a base station of a new unknown cell could be found. If the base station of the unknown cell could be found, the control unit 10a determines that the unknown cell search is valid (effective), and the operation proceeds to step S98. If the base station of the unknown cell could not be found, the control unit 10a determines that the unknown cell search is invalid (ineffective), and the operation proceeds to step S97.

In step S97, the control unit 10a adds "1" to the unknown cell counter CU, and the operation proceeds to step S10 of FIG. 2.

In step S98, the control unit 10a resets the unknown cell counter CU to "0". The control unit 10a regards the base station of the new unknown cell detected in step S95 as the base station of the known cell, and the operation proceeds to step S10 of FIG. 2.

Next, the intermittent reception control is explained again with reference to FIG. 2.

In step S10, the control unit 10a determines which of the known cell counter CK and an upper limit NK of the cell counter is greater, and which of the unknown cell counter CU and an upper limit Nu of the cell counter is greater. If the known cell counter CK is smaller than the upper limit NK thereof and the unknown cell counter CU is smaller than the upper limit Nu thereof, the operation returns to step S2. If at least any one of the known cell counter CK and the unknown cell counter CU is equal to or greater than the corresponding upper limit, the operation proceeds to step S11.

In step S11, the control unit 10a determines whether the threshold value S is smaller than a smallest value SL. If the threshold value S is equal to or greater than the smallest value SL, the operation proceeds to step S12. If the threshold value S is smaller than the smallest value SL, the operation returns to step S2. The smallest value SL is preliminarily stored in the memory 15.

In step S12, the control unit 10a subtracts an adjustment value d from the threshold value S and handles the remainder as a new threshold value S. The operation proceeds to step S13. The adjustment value d is preliminarily stored in the memory 15.

In step S13, the control unit 10a sets "0" at the known cell counter CK and the unknown cell counter CU. The operation returns to step S2.

In the mobile communication terminal, as described above, if a base station under better conditions than the base station of the serving cell cannot be detected as a result of the peripheral cell search, the value of the known cell counter CK or the unknown cell counter CU is counted up. If the value of the known cell counter CK or the unknown cell counter CU reaches the upper limit, the value of the threshold value S used to determine whether the peripheral cell search should be executed becomes smaller to prevent the peripheral cell search from being easily executed.

Thus, in the above-described mobile communication terminal, if a base station under better conditions than the base station of the serving cell cannot be detected, the peripheral cell search cannot easily be executed and unnecessary cell search is not executed. Therefore, the cell search at the intermittent reception can be efficiently executed and the consumed power can be reduced.

The present invention is not limited to the embodiments described above and can be modified in various manners without departing from the spirit and scope of the invention.

In step S96 of the above embodiment, it is determined whether a base station of a new unknown cell can be found. Instead of this determination, for example, a base station of a new unknown cell may be detected and it may be determined whether the power level Su of the signal received from the base station is greater than the power level Sn of the base station of the serving cell detected in step S7. If the power level Su is greater than the power level Sn, the known cell search may be determined valid (effective) and the operation may proceed to step 598. If the power level Su is equal to or smaller than the power level Sn, the known cell search may be determined invalid (ineffective) and the operation may proceed to step S97.

In addition, if the peripheral cell search is invalid (ineffective), the threshold value S is reduced to prevent unnecessary cell search from being easily executed, in the above-described embodiment. Moreover, if the peripheral cell search is valid (effective), the control unit 10a may count down the counter value, or add the threshold value S to the value such that the peripheral cell search can easily be executed if the counter value reaches a determined value. In this case, an upper limit of the threshold value S that cannot become greater than the threshold value S should preferably be set.

Furthermore, the mobile communication terminal used in the W-CDMA system has been explained in the above embodiment. However, the present invention is not limited to this, and can be applied to a cellular mobile communication system in the intermittent reception scheme.

## Claims

1. A communication terminal apparatus capable of making communication via a base station connectable with a communication network, the apparatus **characterized by** comprising:
receiving means (3) for receiving a signal transmitted from the base station;
first control means (10a) for controlling the receiving means (3) to receive a signal transmitted from a serving base station transmitting a paging signal to the communication terminal apparatus if a preset time has passed;
first level detection means (5) for detecting a level of the signal received by the receiving means (3) under control of the first control means (10a);
second control means (10a) for controlling the receiving means (3) to stop the operation of the receiving means (3) if the level detected by the first level detection means (5) is equal to or higher than a threshold value;
third control means (10a) for controlling the receiving means (3) to receive a signal transmitted from a base station other than the serving base station if the level detected by the first level detection means (5) is lower than the threshold value;
second level detection means (5) for detecting a level of the signal received by the receiving means (3) under control of the third control means (10a); and
threshold value varying means (10a) for varying the threshold value in accordance with which of the level detected by the first level detection means (5) and the level detected by the second level detection means (5) is higher.

2. The apparatus according to claim 1, **characterized in that** if the level detected by the first level detection means (5) is equal to or higher than the level detected by the second level detection means (5) the threshold value varying means (10a) makes the threshold value smaller.

3. The apparatus according to claim 1, **characterized in that** if a state in which the level detected by the first level detection means (5) is equal to or higher than the level detected by the second level detection means (5) is repeated at a preset number of times the threshold value varying means (10a) makes the threshold value smaller.

4. The apparatus according to claim 1, **characterized in that** if the level detected by the first level detection means (5) is lower than the level detected by the second level detection means (5) the threshold value varying means (10a) makes the threshold value greater.

5. The apparatus according to claim 1, **characterized in that** if a state in which the level detected by the first level detection means (5) is lower than the level detected by the second level detection means (5) is repeated at a preset number of times the threshold value varying means (10a) makes the threshold value greater.

6. The apparatus according to any one of claims 1 to 5, **characterized in that** the threshold value varying means (10a) varies the threshold value within a preset range.

7. The apparatus according to any one of claims 1 to 5, **characterized in that** if the level detected by the first level detection means (5) is lower than the threshold value the third control means (10a) controls the receiving means (3) to receive the signal from the base station which has been a serving base station.

8. The apparatus according to any one of claims 1 to 5, **characterized by** further comprising serving base station switching means (10a) handling the base station transmitting the signal received by the receiving means (3) under control of the third control means (10a) as a new serving base station if the level detected by the first level detection means (5) is lower than the level detected by the second level detection means (5).

9. A communication terminal apparatus capable of making communication via a base station connectable with a communication network, the apparatus **characterized by** comprising:
receiving means (3) for receiving a signal transmitted from the base station;
first control means (10a) for controlling the receiving means (3) to receive a signal transmitted from a serving base station transmitting a paging signal to the communication terminal apparatus if a preset time has passed;
level detection means (5) for detecting a level of the signal received by the receiving means (3) under control of the first control means (10a);
second control means (10a) for controlling the receiving means (3) to stop the operation of the receiving means (3) if the level detected by the level detection means (5) is equal to or higher than a threshold value;
third control means (10a) for controlling the receiving means (3) to detect an unknown base station if the level detected by the level detection means (5) is lower than the threshold value; and
threshold value varying means (10a) for varying the threshold value in accordance with whether the unknown base station can be detected under control of the third control means (10a).

10. The apparatus according to claim 9, **characterized in that** if the unknown base station cannot be detected under control of the third control means (10a) the threshold value varying means (10a) makes the threshold value smaller.

11. The apparatus according to claim 9, **characterized in that** if a state in which the unknown base station cannot be detected under control of the third control means (10a) is repeated at a preset number of times the threshold value varying means (10a) makes the threshold value smaller.

12. The apparatus according to claim 9, **characterized in that** the unknown base station is detected under control of the third control means (10a) the threshold value varying means (10a) makes the threshold value greater.

13. The apparatus according to claim 9, **characterized in that** if a state in which the unknown base station is detected under control of the third control means (10a) is repeated at a preset number of times the threshold value varying means (10a) makes the threshold value greater.

14. The apparatus according to any one of claims 9 to 13, **characterized in that** the threshold value varying means (10a) varies the threshold value within a preset range.

15. A communication terminal apparatus capable of making communication via a base station connectable with a communication network, the apparatus **characterized by** comprising:
receiving means (3) for receiving a signal transmitted from the base station;
first control means (10a) for controlling the receiving means (3) to receive a signal transmitted from a serving base station transmitting a paging signal to the communication terminal apparatus if a preset time has passed;
first level detection means (5) for detecting a level of the signal received by the receiving means (3) under control of the first control means (10a);
second control means (10a) for controlling the receiving means (3) to stop the operation of the receiving means (3) if the level detected by the first level detection means (5) is equal to or higher than a threshold value;
third control means (10a) for controlling the receiving means (3) to receive a signal transmitted from an unknown base station if the level detected by the first level detection means (5) is lower than the threshold value;
second level detection means (5) for detecting a level of the signal received by the receiving means (3) under control of the first control means (10a); and
threshold value varying means (10a) for varying the threshold value in accordance with which of the level detected by the first level detection means (5) and the level detected by the second level detection means (5) is higher.

16. The apparatus according to claim 15, **characterized in that** if the level detected by the first level detection means (5) is equal to or higher than the level detected by the second level detection means (5) the threshold value varying means (10a) makes the threshold value smaller.

17. The apparatus according to claim 15, **characterized in that** if a state in which the level detected by the first level detection means (5) is equal to or higher than the level detected by the second level detection means (5) is repeated at a preset number of times the threshold value varying means (10a) makes the threshold value smaller.

18. The apparatus according to claim 15, **characterized in that** if the level detected by the first level detection means (5) is lower than the level detected by the second level detection means (5) the threshold value varying means (10a) makes the threshold value greater.

19. The apparatus according to claim 15, **characterized in that** if a state in which the level detected by the first level detection means (5) is lower than the level detected by the second level detection means (5) is repeated at a preset number of times the threshold value varying means (10a) makes the threshold value greater.

20. The apparatus according to any one of claims 15 to 19, **characterized in that** the threshold value varying means (10a) varies the threshold value within a preset range.
